# EUROPEAN PATENT APPLICATION

(11) **EP 3 284 790 A2**
(43) Date of publication of application: **21.02.2018**
(21) Application number: 17186461.4
(22) Date of filing: 16.08.2017
(51) Int. Cl.: C09D 11/00, B41M 1/06, C09D 11/02, C09D 11/101

(54) **SEVEN-COLOR INK SET FOR A DIGITAL ADVANCED LITHOGRAPHIC IMAGING PROCESS**

(30) Priority: 17.08.2016 US 201615239502
(71) Applicant: Xerox Corporation, Rochester, NY 14644 (US)
(72) Inventor: ALLEN, C. Geoffrey, Waterdown, Ontario L0R 2H5 (CA); BIRAU, Mihaela Maria, Hamilton, Ontario L9C 5J6 (CA); MOORLAG, Carolyn, Mississauga, Ontario L5G 4A7 (CA); ABRAHAM, Biby E., Mississauga, Ontario L5M 7E2 (CA); BRETON, Marcel P., Mississauga, Ontario L5K 2S6 (CA)
(74) Representative: Gill Jennings & Every LLP

(57) **Abstract**

An ink composition useful for digital offset printing applications includes a colorant and a high viscosity thickening agent. A process for variable data lithographic printing includes applying a dampening fluid to an imaging member surface; forming a latent image by evaporating the dampening fluid from selective locations on the imaging member surface to form hydrophobic non-image areas and hydrophilic image areas; developing the latent image by applying an ink composition comprising an ink component to the hydrophilic image areas, the ink composition comprising orange/violet/green (OVG) ink formulations resulting in a 7-color ink set meeting the extended color gamut requirements for digital advanced lithographic imaging printing.

## Description

### BACKGROUND OF THE INVENTION

Disclosed herein is a multi-color ink set and in particular to a printing ink set having a wider color gamut than existing ink sets. This disclosure also relates to methods of using such ink compositions, such as in variable lithographic printing applications.

Conventional lithographic printing techniques cannot accommodate true high-speed variable data printing processes in which images to be printed change from impression to impression, for example, as enabled by digital printing systems. The lithography process is often relied upon, however, because it provides very high quality printing due to the quality and color gamut of the inks used. Lithographic inks are also less expensive than other inks, toners, and many other types of printing or marking materials.

Ink-based digital printing uses a variable data lithography printing system, or digital offset printing system, or a Digital Advanced Lithographic Imaging (DALI) system. A "variable data lithography system" is a system that is configured for lithographic printing using lithographic inks and based on digital image data, which may be variable from one image to the next. "Variable data lithography printing," or "digital ink-based printing," or "digital offset printing," or DALI is lithographic printing of variable image data for producing images on a substrate that are changeable with each subsequent rendering of an image on the substrate in an image forming process.

For example, a digital offset printing process may include transferring radiation-curable ink onto a portion of a fluorosilicone-containing imaging member or printing plate that has been selectively coated with a dampening fluid layer according to variable image data. Regions of the dampening fluid are removed by exposure to a focused radiation source (e.g., a laser light source) to form pockets. A temporary pattern in the dampening fluid is thereby formed over the printing plate. Ink applied thereover is retained in the pockets formed by the removal of the dampening fluid. The inked surface is then brought into contact with a substrate and the ink transfers from the pockets in the dampening fluid layer to the substrate. The dampening fluid may then be removed, a new uniform layer of dampening fluid applied to the printing plate, and the process repeated. The ink is then transferred from the printing plate to a substrate such as paper, plastic, or metal on which an image is being printed and cured. The same portion of the imaging plate may be optionally cleaned depending on ink type and used to make a succeeding image that is different than the preceding image, based on the variable image data.

Digital offset printing inks differ from conventional inks because they must meet demanding rheological requirements imposed by the lithographic printing process while being compatible with system component materials and meeting the functional requirements of sub-system components, including wetting and transfer. Print process studies have demonstrated new curable ink designs are needed to meet DALI requirements which include extended color ink sets for certain printing markets including label printing. The current CMYK inks used in DALI fall short of containing certain key color gamuts expected and used in the label printing industry. CMYK is a scheme for combining primary pigments. The C stands for cyan (aqua), M stands for magenta (pink), Y for yellow, and K for Key. The key color is commonly a black ink but other colors could be used for a Key such as brown, blue, white, or the like.

### BRIEF SUMMARY OF THE INVENTION

According to aspects of the embodiments, the present disclosure relates to certain ink compositions which are compatible with dampening fluids and are useful for variable data lithographic printing. The ink composition includes a colorant and a high viscosity thickening agent. A process for variable data lithographic printing includes applying a dampening fluid to an imaging member surface; forming a latent image by evaporating the dampening fluid from selective locations on the imaging member surface to form hydrophobic non-image areas and hydrophilic image areas; developing the latent image by applying an ink composition comprising an ink component to the hydrophilic image areas, the ink composition comprising a multi-color ink set that provides printing presses with increased color options and enables specialty customer-requested brand options.

### BRIEF DESCRIPTION OF THE DRAWINGS

FIG. 1 illustrates a block diagram of a system that shows a related art ink-based digital printing system in which the ink compositions of the present disclosure may be used;
FIG. 2 is a comparison of current ink set (CMY) versus CMY and OGV in accordance to an embodiment;
FIG. 3 is a comparison of total M-C and Y-G gamut volume in accordance to an embodiment;
FIG. 4 is a gamut volume distribution comparison for ink sets in accordance to an embodiment;
FIG. 5 is gamut volume comparison of total M-C for different ink sets in accordance to an embodiment; and
FIG. 6 illustrates an exemplary process flow diagram for OGV Inks compositions sets in accordance to an embodiment.

### DETAILED DESCRIPTION OF THE INVENTION

Exemplary embodiments are intended to cover all alternatives, modifications, and equivalents as may be included within the spirit and scope of the composition, apparatus and systems as described herein.

A more complete understanding of the processes and apparatuses disclosed herein can be obtained by reference to the accompanying drawings. These figures are merely schematic representations based on convenience and the ease of demonstrating the existing art and/or the present development, and are, therefore, not intended to indicate relative size and dimensions of the assemblies or components thereof. In the drawing, like reference numerals are used throughout to designate similar or identical elements.

Example 1 includes an ink composition for variable data lithography printing comprising an ink vehicle and at least one colorant component suspended in solution in the ink composition; and the solution comprising two or more of at least one dispersant; a thermal stabilizer; and a photo initiator system; wherein the at least one colorant component is selected from a group that includes a cyan ink, a magenta ink, a yellow ink, a black ink, and one or more of an orange ink, a green ink and a violet ink.

Example 2 includes example 1 and the solution further comprising a rheology modifying agent.

Example 3 includes example 2 and wherein the vehicle is a radiation-curable water dilutable compound that comprises water-dilutable monomer compounds selected from the group of compounds comprising mono-, di-, and tri-functional water-dilutable acrylate monomers and oligomers.

Example 4 includes example 3 and wherein the green ink contains Hostaperm Green 8G.

Example 5 includes example 3 and wherein the orange ink contains Permanent Orange RLF01.

Example 6 includes example 3 and wherein the violet ink contains Hostaperm Violet RL02.

Example 7 includes example 2 and wherein the colorant contains Permanent Orange RLF01, Hostaperm Violet RL02, and Hostaperm Green 8G.

Example 8 includes example 7 and the rheology modifying agent being in an amount of 2, 4, 8, or 9 percent by weight.

Example 9 includes example 8 and wherein the ink composition has a viscosity range of 1 - 2.5 × 10⁵ centipoise (cps) at 35°C.

Example 10 includes example 9 and wherein the ink composition has a tack range of 25-35 g·m (60 s) at 35°C.

Example 11 includes example 9, wherein the one or more of an orange ink, a green ink and a violet ink being in an amount of 15 percent by weight.

Example 12 includes process for variable lithographic printing, comprising applying a dampening fluid to an imaging member surface; forming a latent image by evaporating the dampening fluid from selective locations on the imaging member surface to form hydrophobic non-image areas and hydrophilic image areas; developing the latent image by applying an ink composition comprising an ink component to the hydrophilic image areas; and transferring the developed latent image to a receiving substrate; wherein the ink composition comprises an ink vehicle and at least one colorant component suspended in solution in the ink composition; and the solution comprising two or more of at least one dispersant; a thermal stabilizer; and a photo initiator system; wherein the at least one colorant component is selected from a group that includes a cyan ink, a magenta ink, a yellow ink, a black ink, and one or more of an orange ink, a green ink and a violet ink; wherein colorant components s have a viscosity range of 1 - 2.5 × 10⁵ cps and a tack range of 25-35 g·m (60 s) at 32°C.

The modifier "about" used in connection with a quantity is inclusive of the stated value and has the meaning dictated by the context (for example, it includes at least the degree of error associated with the measurement of the particular quantity). When used with a specific value, it should also be considered as disclosing that value. For example, the term "about 2" also discloses the value "2" and the range "from about 2 to about 4" also discloses the range "from 2 to 4."

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations. The terms "first," "second," and the like, herein do not denote any order, quantity, or importance, but rather are used to distinguish one element from another. The terms "a" and "an" herein do not denote a limitation of quantity, but rather denote the presence of at least one of the referenced item.

The term "printing device" or "printing system" as used herein refers to a digital copier or printer, scanner, image printing machine, digital production press, document processing system, image reproduction machine, bookmaking machine, facsimile machine, multi-function machine, or the like and can include several marking engines, feed mechanism, scanning assembly as well as other print media processing units, such as paper feeders, finishers, and the like. The printing system can handle sheets, webs, marking materials, and the like. A printing system can place marks on any surface, and the like and is any machine that reads marks on input sheets; or any combination of such machines.

The term "print media" generally refers to a usually flexible, sometimes curled, physical sheet of paper, substrate, plastic, or other suitable physical print media substrate for images, whether precut or web fed.

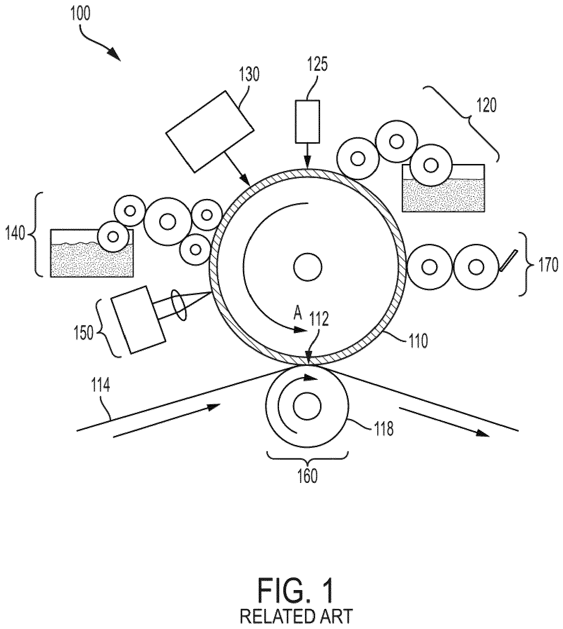

As shown in FIG. 1, the exemplary system 100 may include an imaging member 110. System 100 illustrates a system for variable lithography in which the ink compositions of the present disclosure may be used. The imaging member 110 in the embodiment shown in FIG. 1 is a drum, but this exemplary depiction should not be interpreted so as to exclude embodiments wherein the imaging member 110 includes a drum, plate or a belt, or another now known or later developed configuration. The reimageable surface may be formed of materials including, for example, a class of materials commonly referred to as silicones, including polydimethylsiloxane (PDMS), among others. For example, silicone, fluorosilicone, and/or VITON may be used. The reimageable surface may be formed of a relatively thin layer over a mounting layer, a thickness of the relatively thin layer being selected to balance printing or marking performance, durability and manufacturability.

The imaging member 110 is used to apply an ink image to an image receiving media substrate 114 at a transfer nip 112. The transfer nip 112 is formed by an impression roller 118, as part of an image transfer mechanism 160, exerting pressure in the direction of the imaging member 110. Image receiving medium substrate 114 should not be considered to be limited to any particular composition such as, for example, paper, plastic, or composite sheet film. The exemplary system 100 may be used for producing images on a wide variety of image receiving media substrates. There is wide latitude of marking (printing) materials that may be used, including marking materials with pigment loading greater than 10% by weight. This disclosure will use the term ink to refer to a broad range of printing or marking materials to include those which are commonly understood to be inks, pigments, and other materials which may be applied by the exemplary system 100 to produce an output image on the image receiving media substrate 114.

The imaging member 110 including the imaging member 110 being comprised of a reimageable surface layer formed over a structural mounting layer that may be, for example, a cylindrical core, or one or more structural layers over a cylindrical core.

The exemplary system 100 includes a dampening fluid system 120 generally comprising a series of rollers, which may be considered as dampening rollers or a dampening unit, for uniformly wetting the reimageable surface of the imaging member 110 with dampening fluid. A purpose of the dampening fluid system 120 is to deliver a layer of dampening fluid, generally having a uniform and controlled thickness, to the reimageable surface of the imaging member 110. As indicated above, it is known that a dampening fluid such as fountain solution may comprise mainly water optionally with small amounts of isopropyl alcohol or ethanol added to reduce surface tension as well as to lower evaporation energy necessary to support subsequent laser patterning, as will be described in greater detail below. Small amounts of certain surfactants may be added to the fountain solution as well. Alternatively, other suitable dampening fluids may be used to enhance the performance of ink based digital lithography systems. Exemplary dampening fluids include water, NOVEC^{®} 7600 (1,1,1,2,3,3-Hexafluoro-4-(1,1,2,3,3,3-hexafluoropropoxy)pentane and has CAS#870778-34-0.), and D4 (octamethylcyclotetrasiloxane).

Once the dampening fluid is metered onto the reimageable surface of the imaging member 110, a thickness of the dampening fluid may be measured using a sensor 125 that may provide feedback to control the metering of the dampening fluid onto the reimageable surface of the imaging member 110 by the dampening fluid system 120.

After a precise and uniform amount of dampening fluid is provided by the dampening fluid system 120 on the reimageable surface of the imaging member 110, and optical patterning subsystem 130 may be used to selectively form a latent image in the uniform dampening fluid layer by image-wise patterning the dampening fluid layer using, for example, laser energy. Typically, the dampening fluid will not absorb the optical energy (IR or visible) efficiently. The reimageable surface of the imaging member 110 should ideally absorb most of the laser energy (visible or invisible such as IR) emitted from the optical patterning subsystem 130 close to the surface to minimize energy wasted in heating the dampening fluid and to minimize lateral spreading of heat in order to maintain a high spatial resolution capability. Alternatively, an appropriate radiation sensitive component may be added to the dampening fluid to aid in the absorption of the incident radiant laser energy. While the optical patterning subsystem 130 is described above as being a laser emitter, it should be understood that a variety of different systems may be used to deliver the optical energy to pattern the dampening fluid.

The mechanics at work in the patterning process undertaken by the optical patterning subsystem 130 of the exemplary system 100 are known to those in the art. Briefly, the application of optical patterning energy from the optical patterning subsystem 130 results in selective removal of portions of the layer of dampening fluid.

Following patterning of the dampening fluid layer by the optical patterning subsystem 130, the patterned layer over the reimageable surface of the imaging member 110 is presented to an inker subsystem 140. The inker subsystem 140 is used to apply a uniform layer of ink over the layer of dampening fluid and the reimageable surface layer of the imaging member 110. The inker unit 140 further comprises heated ink baths whose temperatures are regulated by temperature control module. The inker subsystem 140 may use an anilox roller to meter an offset lithographic ink onto one or more ink forming rollers that are in contact with the reimageable surface layer of the imaging member 110. Separately, the inker subsystem 140 may include other traditional elements such as a series of metering rollers to provide a precise feed rate of ink to the reimageable surface. The inker subsystem 140 may deposit the ink to the pockets representing the imaged portions of the reimageable surface, while ink on the unformatted portions of the dampening fluid will not adhere to those portions.

The cohesiveness and viscosity of the ink residing in the reimageable layer of the imaging member 110 may be modified by a number of mechanisms. One such mechanism may involve the use of a rheology (complex viscoelastic modulus) control subsystem 150. The rheology control system 150 may form a partial crosslinking core of the ink on the reimageable surface to, for example, increase ink cohesive strength relative to the reimageable surface layer. Curing mechanisms may include optical or photo curing, heat curing, drying, or various forms of chemical curing. Cooling may be used to modify rheology as well via multiple physical cooling mechanisms, as well as via chemical cooling.

The ink is then transferred from the reimageable surface of the imaging member 110 to a substrate of image receiving medium 114 using a transfer subsystem 160. The transfer occurs as the substrate 114 is passed through a nip 112 between the imaging member 110 and an impression roller 118 such that the ink within the voids of the reimageable surface of the imaging member 110 is brought into physical contact with the substrate 114. With the adhesion of the ink having been modified by the rheology control system 150, modified adhesion of the ink causes the ink to adhere to the substrate 114 and to separate from the reimageable surface of the imaging member 110. Careful control of the temperature and pressure conditions at the transfer nip 112 may allow transfer efficiencies for the ink from the reimageable surface of the imaging member 110 to the substrate 114 to exceed 95%. While it is possible that some dampening fluid may also wet substrate 114, the volume of such a dampening fluid will be minimal, and will rapidly evaporate or be absorbed by the substrate 114.

In certain offset lithographic systems, it should be recognized that an offset roller, not shown in FIG. 1, may first receive the ink image pattern and then transfer the ink image pattern to a substrate according to a known indirect transfer method. Following the transfer of the majority of the ink to the substrate 114, any residual ink and/or residual dampening fluid must be removed from the reimageable surface of the imaging member 110, preferably without scraping or wearing that surface. An air knife may be employed to remove residual dampening fluid. It is anticipated, however, that some amount of ink residue may remain. Removal of such remaining ink residue may be accomplished through use of some form of cleaning subsystem 170. The cleaning subsystem 170 comprises at least a first cleaning member such as a sticky or tacky member in physical contact with the reimageable surface of the imaging member 110, the sticky or tacky member removing residual ink and any remaining small amounts of surfactant compounds from the dampening fluid of the reimageable surface of the imaging member 110. The sticky or tacky member may then be brought into contact with a smooth roller to which residual ink may be transferred from the sticky or tacky member, the ink being subsequently stripped from the smooth roller by, for example, and a doctor blade.

Other mechanisms by which cleaning of the reimageable surface of the imaging member 110 may be facilitated. Regardless of the cleaning mechanism, however, cleaning of the residual ink and dampening fluid from the reimageable surface of the imaging member 110 is essential to preventing ghosting in the proposed system. Once cleaned, the reimageable surface of the imaging member 110 is again presented to the dampening fluid system 120 by which a fresh layer of dampening fluid is supplied to the reimageable surface of the imaging member 110, and the process is repeated.

As discussed above, digital offset ink must possess physical and chemical properties that are specific to ink-based digital printing systems. The ink must be compatible with materials that it comes in contact with, including the imaging plate and dampening fluid, and printable substrates such as paper, metal, or plastic. The ink must also meet all functional requirements of the subsystems including wetting and transfer properties defined by subsystem architecture and material sets.

Inks formulated for ink-based digital printing, or digital offset inks, are different in many ways from other inks developed for printing applications, including pigmented solvents, UV gel inks, and other inks. For example, digital offset inks contain much higher pigment and therefore have higher viscosity at room temperature than other inks, which can make ink delivery by way of an anilox roll or inkjet system difficult. Digital offset inks must meet certain wetting and release property requirements imposed by the imaging member used for ink-based digital printing processes, while being compatible with non-aqueous dampening fluid options. Digital offset ink should not cause the imaging member surface to swell. Water-dilutable and water-diluted inks in accordance with embodiments include digital offset acrylate inks meeting such requirements.

Digital offset inks in accordance with water-dilutable ink embodiments advantageously have a much lower solubility in dampening fluid such as D4 than related art inks. Also, digital offset inks of embodiments do not tend to swell a silicone-containing imaging member surface layer used in ink-based digital printing systems such as that shown in FIG. 1, which may be a silicone, fluorosilicone, or VITON-containing imaging plate or blanket.

The ink must be compatible with materials it is in contact with, including printing plate 110, fountain solution applied by dampening fluid system 120, and other cured or non-cured inks. It must also meet all functional requirements of the sub-systems, including wetting and transfer properties. Transfer of the imaged inks is challenging, as the ink must at once wet the blanket material homogeneously (plate 110), and transfer from the blanket to the substrate (112, 114, and 118). Transfer of the image layer must be very efficient, at least as high as 90%, as the cleaning sub-station can only eliminate small amounts of residual ink. Any ink remaining on the blanket after cleaning would result in an unacceptable ghost image appearing in subsequent prints. Not surprisingly, ink rheology plays a key role in the transfer characteristics of an ink.

In addition to the physical characteristic requirements there is a need in the art for DALI ink designs to meet DALI requirements which include extended color ink sets for certain print jobs including label printing. The current CMYK inks used in DALI, while resulting in similar color gamut compared to General Requirements for Applications in Commercial Offset Lithography (GRACoL) graphic arts standard, still fall short of containing certain key color gamuts expected and used in the label printing industry. To meet these ink requirements, embodiments disclose the compositions of orange/violet/green (OVG) ink formulations resulting in a 7-color ink set (CMYK+OVG) meeting the extended color gamut requirements for DALI printing such as for label printing. With the incorporation of OVG inks into the existing CMY DALI ink set, the color gamut is significantly extended by twenty two percent (22%) compared with DALI CMY and by twenty five percent (25%) compared to the GRACoL 2013 color standard.

The ability to meet all print job requirements for color printing requires the introduction of additional process color inks to the standard CMYK set. A multi-color ink set provides printing presses with increased color options and enables specialty print job requirements targeted to commercial brand options. Print quality is improved due to the ability to perform accurate reproduction. An additional advantage is that extended gamut provided by a multi-color set generally eliminates the need to provide spot colors, eliminating waste and added cost for the customer and development work for the vendor (or formulating colors on the press, which is unlikely due to the sensitive DALI print process), and little to no press down time due to color changeover. The disclosed embodiments cover a full set of CMYK as well as orange, green, and violet (OVG) inks which can be formulated and processed to be functional for the DALI process.

The current CMYK ink set developed for DALI meets the specifications for the General Requirements for Applications in Commercial Offset Lithography (GRACoL) and Specifications for Wide Offset Publications, but can fall short for expanded color gamut targets. For complex print jobs, an ink set with an expanded gamut is more efficient and cheaper than using custom inks. Multiple print jobs can be printed in series (ganged) without changeover with a 7-color ink set.

Hue, Chroma (saturation) and lightness of a system containing at least one colorant, such as in an ink, are used to define a color. Pigments are required to have high degree of dispersion and Chroma to yield an intensely saturated color, and the use of mono-pigmented inks are important to provide highly saturated color with high Chroma, Single color pigments are chosen to formulate OGV inks with near-optimized maximized brightness and Chroma, and new formulations were prepared to meet the required compatibility and function in the DALI architecture.

The disclosed ink formulation covers the composition of an ink set targeting the extension of the color gamut of a colored printing ink set in the DALI (Digital Architecture for Lithographic Inks) printing process. The ink compositions described are new compositions for DALI ink which are formulated to have specified materials properties enabling transfer, release, and the desired print properties in the DALI print process.

The OVG ink formulation shown in Tables 1-3 meet the extended color gamut requirements needed in variable lithography system or DALI systems. The inks described herein may include the following components: (a) radiation-curable water-dilutable monomer compounds, including mono-, di-, and tri-functional water-dilutable acrylate monomers, oligomers; (b) dispersants; (c) pigments; (d) clays or additives; (e) initiators; (f) additional curable compounds including monomers, oligomers, including oligomers from Sartomer USA, LLC or Cytec Industries, Inc., prepolymers, polymers; (g) additives including surfactants, free-radical scavengers, and the like; (h) thermal stabilizers.

The water-diluted curable components may include any water-dilutable acrylate or methacrylate monomer compound(s) suitable for use as a phase change ink carrier or ink vehicle that may be water dilutable, with an addition of water being available to adjust and/or enhance background performance for use in the variable digital data lithographic printing architecture. In embodiments, the water-diluted curable component is a water-dilutable functional acrylate monomer, a methacrylate monomer, a multifunctional acrylate monomer, a multifunctional methacrylate monomer, or a mixture or combination thereof. Exemplary acrylates may include acrylate monomers or polymers such as polyester acrylates Sartomer CN294E, Sartomer CD-501, Sartomer CN9014, Sartomer CN2282 and Sartomer CN2256. In embodiments, a mixture of the components is water-dilutable.

Examples of curable monomers and diluting acrylates which can be used in the ink compositions as vehicles may include Trimethylolpropane triacrylate; SR-492, SR-501, SR-444, SR-454, SR-499, SR-502, SR-9035 and SR-415 from Sartomer; EBECRYL 853 and EBECRYL 5500 from Allnex. Trimethylolpropane triacrylate has a refractive index of 1.474, a specific gravity of 1.06 g/cm³, an APHA Color of less than 300 and a viscosity range of 80 to 120 cps at 25°C. Sartomer SR-492 is a three mole propoxylated trimethylolpropane triacrylate and has a refractive index of 1.459, a specific gravity of 1.05 g/cm³, a Tg of -15°C, an APHA Color of 30 and a viscosity of 90 cps at 25°C. Sartomer SR-501 is a six mole propoxylated trimethylolpropane triacrylate and has a refractive index of 1.4567, a specific gravity of 1.048 g/cm³, a Tg of -2°C, an APHA Color of 90 and a viscosity of 125 cps at 25°C. Sartomer SR-444 is a pentaerythritol triacrylate and has a refractive index of 1.4801, a specific gravity of 1.162 g/cm³, a Tg of 103°C, an APHA Color of 50 and a viscosity of 520 cps at 25°C. Sartomer SR-454 is a three mole ethoxylated trimethylolpropane triacrylate and has a refractive index of 1.4689, a specific gravity of 1.103 g/cm³, a Tg of 120°C, an APHA Color of 55 and a viscosity of 60 cps at 25°C.

Sartomer SR-499 is a six mole ethoxylated trimethylolpropane triacrylate and has a refractive index of 1.4691, a specific gravity of 1.106 g/cm³, a Tg of -8°C, an APHA Color of 50 and a viscosity of 85 cps at 25°C. Sartomer SR-502 is a nine mole ethoxylated trimethylolpropane triacrylate and has a refractive index of 1.4691, a specific gravity of 1.11 g/cm³, a Tg of -19°C, an APHA Color of 140 and a viscosity of 130 cps at 25°C. Sartomer SR-9035 is a fifteen mole ethoxylated trimethylolpropane triacrylate and has a refractive index of 1.4695, a specific gravity of 1.113 g/cm³, a Tg of -32°C, an APHA Color of 60 and a viscosity of 168 cps at 25°C. Sartomer SR-415 is a twenty mole ethoxylated trimethylolpropane triacrylate and has a refractive index of 1.4699, a specific gravity of 1.115 g/cm³, a Tg of -40°C, an APHA Color of 55 and a viscosity of 225 cps at 25°C. EBECRYL 853 is a low viscosity polyester triacrylate and has a specific gravity of 1.10 g/cm³, an APHA Color of 200 and a viscosity of 80 cps at 25°C. EBECRYL 5500 is a low viscosity glycerol derivative triacrylate and has a specific gravity of 1.07 g/cm³, an APHA Color of 62 and a viscosity of 130 cps at 25°C. Other triacrylate, monoacrylate, diacrylate, tetraacrylate and higher functional acrylate monomers, diluting acrylates, and various combinations thereof, can also be used in the ink compositions as vehicles.

One or more components in a mixture may be non-water dilutable, if the ink is water dilutable, and the reactive component are themselves miscible. In the same way that water may be added, in some embodiments, co-reactive monomers may be added to control polarity of the ink. Specific examples of water-dilutable curable components include, but are not limited to, the functional water soluble aromatic urethane acrylate compound (available from CYTEC as EBECRYL 2003), the di-functional compound polyethylene glycol diacrylate (available from CYTEC as EBECRYL 11), and the tri-functional compound polyether triacrylate (available from CYTEC as EBECRYL 12). The monomer or oligomer can be present in any suitable amount. In embodiments, the monomer or oligomer, or combination thereof is added in an amount of from about 10 to about 85%, or from about 30 to about 80%, or from about 50 to about 70%, by weight based on the total weight of the curable ink composition. Curable oligomers which can be used in the ink compositions as vehicles may include Sartomer CN294E; CN2256; CN2282; CN9014 and CN309. Sartomer CN294E is a tetrafunctional acrylated polyester oligomer. CN294E is a clear liquid having a specific gravity of 0.93 and a viscosity of 4,000 cps at 60°C. Sartomer CN2256 is a difunctional polyester acrylate oligomer and has a refractive index of 1.5062, a Tg of -22°C., a tensile strength of 675 psi, and a viscosity of 11,000 cps at 60°C.

Sartomer CN2282 is a tetrafunctional acrylated polyester and is a clear liquid having a specific gravity of 1.15 and a viscosity of 2,500 cps at 60°C. Sartomer CN9014 is a difunctional acrylated urethane and is a non-clear liquid having a specific gravity of 0.93 and a viscosity of 19,000 cps at 60°C. Sartomer CN309 is an oligomer containing an acrylate ester that derives from an aliphatic hydrophobic backbone, or in other words is an aliphatic acrylate ester. CN309 is a clear liquid having a specific gravity of 0.92, a density of 7.68 pounds/gallon, a surface tension of 26.3 dynes/cm, a viscosity of 150 cps at 25°C, and a viscosity of 40 cps at 60°C.

Examples of curable oligomers which can be used in the ink compositions as vehicles may include CN294E, CN2256, CN2282, CN9014 and CN309 from Sartomer; EBECRYL 8405, EBECRYL 8411, EBECRYL 8413, EBECRYL 8465, EBECRYL 8701, EBECRYL 9260, EBECRYL 546, EBECRYL 657, EBECRYL 809, and the like from Allnex. EBECRYL 8405 is a tetrafunctional urethane acrylate diluted as 80 wt% by weight in 1,6-Hexanediol diacrylate (HDDA). EBECRYL 8405 is a clear liquid having a Gardner Color of 2 and a viscosity of 4,000 cps at 60°C. EBECRYL 8411 is a difunctional urethane acrylate diluted as 80 wt% by weight in isobornylacrylate (IBOA). EBECRYL 8411 is a clear liquid having a viscosity range of 3,400 to 9, 500 cps at 65°C. EBECRYL 8413 is a difunctional urethane acrylate diluted as 67 wt% by weight in IBOA. EBECRYL 8413 is a clear liquid having a viscosity of 35,000 cps at 60°C. EBECRYL 8465 is a trifunctional urethane acrylate. EBECRYL 8465 is a clear liquid having a Gardner Color of 2 and a viscosity of 21,000 cps at 60°C. EBECRYL 8701 is a trifunctional urethane acrylate. EBECRYL 8701 is a clear liquid having a Gardner Color of 2 and a viscosity of 4,500 cps at 60°C. EBECRYL 9260 is a trifunctional urethane acrylate. EBECRYL 9260 is a clear liquid having a Gardner Color of 2 and a viscosity of 4,000 cps at 60°C. EBECRYL 546 is a trifunctional polyester acrylate. EBECRYL 546 is a clear liquid having a Gardner Color of 1.5 and a viscosity of 350,000 cps at 25°C. EBECRYL 657 is a tetrafunctional polyester acrylate. EBECRYL 657 is a clear liquid having a Gardner Color of 4 and a viscosity of 125,000 cps at 25°C. EBECRYL 809 is a trifunctional polyester acrylate. EBECRYL 809 is a clear liquid having a Gardner Color of 3 and a viscosity of 1,300 cps at 60°C.

The dispersant components may include any suitable or desired dispersant including, but not limited to AB-diblock copolymers of high molecular weight such as EFKA^{®} 4340 available from BASF SE, and DISPERBYK.RTM. 2100 available from Byk-Chemie GmbH, or a mixture thereof. In a specific embodiment, the dispersant mixture comprises a cyclohexane dimethanol diacrylate (such as CD406^{©} available from Sartomer USA, LLC) and at least one additional component, such as EFKA^{®} 4340 is a high molecular weight dispersing agent having an AB-diblock copolymer structure available from BASF SE. In an exemplary embodiment, the dispersant is a polymeric dispersant, such as SOLSPERSE^{®} 39000, commercially available from The Lubrizol Corporation. The dispersant may be added in an amount within the range of from about 20% to about 100% by weight, based on the weight of the composition. Dispersant may be added in an amount that is determined based on the amount of pigment used.

The disclosed curable ink composition also includes a colorant or pigment component, which may be any desired or effective colorant may be employed, including pigments, mixtures of pigments, mixtures of pigments and dyes, and the like, provided that the colorant may be dissolved or dispersed in the at least one monomer and at least one dispersant. In specific embodiments, the colorant is a pigment. Examples of suitable pigments include PALIOGEN Violet 5100 (BASF); PALIOGEN Violet 5890 (BASF); HELIOGEN Green L8730 (BASF); LITHOL Scarlet D3700 (BASF); SUNFAST. Blue 15:4 (Sun Chemical); Hostaperm Blue B2G-D (Clariant); Permanent Red P-F7RK; HOSTAPERM Violet BL (Clariant); LITHOL Scarlet 4440 (BASF); Bon Red C (Dominion Color Company); ORACET Pink RF (Ciba); PALIOGEN Red 3871 K (BASF); SUNFAST Blue 15:3 (Sun Chemical); PALIOGEN Red 3340 (BASF); SUNFAST Carbazole Violet 23 (Sun Chemical); LITHOL Fast Scarlet L4300 (BASF); SUNBRITE Yellow 17 (Sun Chemical); HELIOGEN Blue L6900, L7020 (BASF); SUNBRITE Yellow 74 (Sun Chemical); SPECTRA PAC C Orange 16 (Sun Chemical); HELIOGEN Blue K6902, K6910 (BASF); SUNFAST.RTM. Magenta 122 (Sun Chemical); HELIOGEN Blue D6840, D7080 (BASF); Sudan Blue OS (BASF); NEOPEN Blue FF4012 (BASF); PV Fast Blue B2GO1 (Clariant); IRGALITE Blue BCA (Ciba); PALIOGEN Blue 6470 (BASF); Sudan Orange G (Aldrich), Sudan Orange 220 (BASF); PALIOGEN Orange 3040 (BASF); PALIOGEN Yellow 152, 1560 (BASF); LITHOL Fast Yellow 0991 K (BASF); PALIOTOL Yellow 1840 (BASF); NOVOPERM Yellow FGL (Clariant); Lumogen Yellow D0790 (BASF); Suco-Yellow L1250 (BASF); Suco-Yellow D1355 (BASF); Suco Fast Yellow D1355, D1351 (BASF); HOSTAPERM Pink E 02 (Clariant); Hansa Brilliant Yellow 5GX03 (Clariant); Permanent Yellow GRL 02 (Clariant); Permanent Rubine L6B 05 (Clariant); FANAL Pink D4830 (BASF); CINQUASIA Magenta (DuPont); PALIOGEN Black L0084 (BASF); Pigment Black K801 (BASF); and carbon blacks such as REGAL 330^{®} (Cabot), Carbon Black 5250, Carbon Black 5750 (Columbia Chemical), and the like, as well as mixtures thereof.

The disclosed curable ink composition also includes a thermal stabilizer (h), an exemplary thermal stabilizer is Sartomer CN3216, which is an acrylate stabilizing additive having a specific gravity of 1.113 at 25°C and a viscosity of 1,100 cps at 25°C. Another exemplary thermal stabilizer is IRGASTAB UV 10, available from Ciba Specialty Chemicals, which acts as a radical scavenger. Both aforementioned radical scavengers, among others, promote in-can stability of the ink as it is stored at room temperature over time and prevent partial thermal curing of UV curable components while they are being processed at elevated temperatures with a pigment and other components to form a radiation curable ink.

The disclosed curable ink composition also includes a mixture of clay and CN2256 to achieve optimum rheological or image transfer characteristics.

In an exemplary embodiment, a digital offset ink composition may include a cyan pigment, BASF HELIOGEN Blue D 7088, originally available as IRGALITE Blue GLO from Ciba. The amount of colorant or pigment added to the ink composition may be within the range of from about 10% to about 30% by weight of the composition, or from about 19% to about 25%, or from about 20% or more, up to about 30%, based on the total weight of the ink composition.

In some embodiments, the acrylate ink compositions may include rheology modifiers. Exemplary rheology modifiers may be modified or unmodified inorganic compounds including organoclays, attapulgite clays and bentonite clays, including tetraallkyl ammonium bentonites as well as treated and untreated synthetic silicas. Suitable organoclays include from Southern Clay Products CLAYTONE HA and CLAYTONE HY. Suitable examples of tetraallkyl ammonium bentonites include from Celeritas Chemicals CELCHEM 31743-09, CELCHEM 31744-09, and CELCHEM 31745-09. Other exemplary rheology modifiers include organic compounds such as EFKA RM1900 and EFKA RM1920, both modified hydrogenated castor oils from BASF. The colorant may be added together with a clay (d) component. In an embodiment, the clay is CLAYTONE^{®} HY from Southern Clay Products. In an embodiment the clay component may be replaced with a silica, e.g.: AEROSIL 200 available from Degussa Canada, Ltd, and is added in an amount within the range of from about 1% to about 5% by weight, or from about 1.4% to about 3.5% by weight, or from about 1.8% to 2.0% by weight, based on the total weight of the composition.

Digital offset ink compositions of embodiments include initiator systems, which may include a photoinitiator that initiates polymerization of curable components of the ink, including the curable monomer. In an embodiment, the initiator is an ultraviolet radiation-activated photoinitiator. Exemplary photoinitiators include IRGACURE 379, IRGACURE 184 and IRGACURE 819, both available from Ciba Specialty Chemicals. IRGACURE 379 is 2-dimethylamino-2-(4-methyl-benzyl)-1-(4-morpholino-4-yl-phenyl)-butan-1-one, with a molecular weight of 380.5. IRGACURE 184 is 1-hydroxy-cyclohexyl-phenyl-ketone, having a molecular weight of 204.3. IRGACURE 819 is bis(2,4,6-trimethylbenzoyl)-phenylphosphine oxide, having a molecular weight of 418.5. Another exemplary photoinitiator is Esacure KIP 150, available from Lamberti Technologies, which is an oligomeric alpha hydroxyketone, oligo[2-hydroxy-2-methyl-1-[4-(1-methylvinyl)phenyl]propanone]. The photoinitiator(s) may be present in an amount of from 0 to about 10 wt % of the ink composition, including from about 5 to about 8 wt %. In some embodiments, the (meth)acrylate ink compositions may include photoinitiators. Photoinitiators may be liquid- or solid-based or combinations thereof. Suitable Type I photoinitiators include those from classes of dialkoxy-aceto-pheonones, dialkoxy-alkyl-pheonones, amino-alkyl-pheonones, and acyl-phosphine oxides. Suitable Type II photoinitiators include those from classes of benzophenones and thioxanthones, which require activation from suitable amine synergists. Exemplary photoinitiators include ADDITOL LX, ADDITOL DX, ADDITOL BDK, ADDITOL CPK, ADDITOL DMMTA, ADDITOL TPO from Allnex, Esacure 1001M from IRGACURE 127, IRGACURE 184, IRGACURE 379, IRGACURE 819 and IRGACURE 2959 from BASF. Exemplary amine synergists that are used with Type II photoinitiators include SPEEDCURE PDA, SPEEDCURE EDB from Lambson, Diethylaminoethyl Methacrylate, Ethyl-4-dimethylamino benzoate, 2-Ethylhexyl 4-dimethylamino benzoate from Esstech, Inc. In some embodiment, the (meth)acrylate ink composition may include low odor photoinitiators, such as, ESACURE KIP 150 available from Lamberti S.p.A.

Suitable equipment and processes to effect a high quality dispersion of the pigment, filler materials, thixotropes and the like, such as to result in colors with high degrees of saturation, include 3-roll mills, high viscosity blenders, kneaders, high shear mixers, acoustic mixers, planetary mixers, extruders and other equipment that can adequately disperse pigments in high viscosity media, to be used alone or in combination.

Ink formulations based on the above-mentioned water-dilutable ink material components were formed. These inks were prepared by process familiar to those in the art. Exemplary formulations are disclosed in Table 1 showing the formulation and processing of Orange DALI Ink with a Permanent Orange RLF01 pigment type; Table 2: showing the formulation and processing of Green DALI Ink using a Hostaperm Green 8G pigment type; and, Table 3 showing the formulation and processing of Violet DALI Ink using Hostaperm Violet RL02. These formulations do not limit the scope of disclosure. The Base ink composition for DALI ink, no specific colors or extended gamut, is disclosed in U.S. Patent No. 8,771,787, the disclosures of which are hereby incorporated by reference. The exact choice of pigment will depend upon the specific color reproduction and image stability requirements of the printer and application. Adding orange/violet/green (OVG) ink formulations results in a 7-color ink set extending and meeting color gamut requirements for DALI printing in terms of colors, and desirable physical and chemical properties.

**Table 1: Formulation/Processing of Orange DALI Ink**

| Component | | wt% | g |
|---|---|---|---|
| Permanent Orange RLS 01 | | 15 | 12 |
| Solsperse 39000 | | 6 | 4.8 |
| Oligomers | Sartomer CN294E | 48.91 | 39.13 |
| | Sartomer CN2256 | 8.81 | 7.05 |
| Monomer | Sartomer SR-501 | 11.27 | 9.02 |
| Photoinitiators | BASF Irgacure 379 | 2 | 1.6 |
| | BASF Irgacure 819 | 1.39 | 1.11 |
| | Lamberti Esacure KIP 150 | 3.62 | 2.89 |
| Thermal stabilizer | Sartomer CN3216 | 1 | 0.8 |
| Filler | Southern Clay Products Claytone HY | 2 | 1.6 |
| Total (%wt) | | 100 | 80 |
| Process Step **1** | | Resodyn LabRAM Mixer | |
| Process parameters | Intensity % | 90 | |
| | G's | 64-105 | |
| | Time (min) | 10 | |
| | Frequency | 60 Hz automatic | |
| Process Step 2 | | melt mixing in beaker | |
| Process parameters | rpm | 1000 | |
| | temperature °C | 80 | |
| | Time (min) | 45 | |
| Process step 3 | | Erweka AR400 3 roll mill | |
| Process parameters | pass #1 | ✔ | |
| | temperature °C | 80 | |
| | pass #2 | ✔ | |
| | temperature °C | 30 | |
| | pass#3 | ✔ | |
| | temperature °C | 30 | |

**Table 2: Formulation/Processing of Green DALI Ink**

| Ink Formulation | | wt% | g |
|---|---|---|---|
| Hostaperm Green 8G | | 15 | 12 |
| Solsperse 39000 | | 6 | 4.8 |
| Oligomers | Sartomer CN294E | 48.91 | 39.13 |
| | Sartomer CN2256 | 8.81 | 7.05 |
| | Sartomer CN9014 | 0 | 0 |
| Gellant | LMW - (AB3113) | 0 | 0 |
| Monomer | Sartomer CD501 | 11.27 | 9.02 |
| Photoinitiators | BASF Irgacure 379 | 2 | 1.6 |
| | BASF Irgacure 819 | 1.39 | 1.11 |
| | Lamberti Esacure KIP 150 | 3.62 | 2.89 |
| Thermal stabilizer | Sartomer CN3216 | 1 | 0.8 |
| Filler | Southern Clay Products Claytone HY | 2 | 1.6 |
| Total (%wt) | | 100 | 80 |
| Process Step 1 | | Resodyn LabRAM Mixer | |
| Process parameters | Intensity % | 90 | |
| | G's | 64-105 | |
| | Time (min) | 10 | |
| | Frequency | 60 Hz automatic | |
| Process Step 2 | | melt mixing in beaker | |
| Process parameters | rpm | 1000 | |
| | temperature °C | 80 | |
| | Time (min) | 45 | |
| Process step 3 | | Erweka AR400 3 roll mill | |
| Process parameters | pass#1 | ✔ | |
| | temperature °C | 80 | |
| | pass #2 | ✔ | |
| | temperature °C | 30 | |
| | pass#3 | ✔ | |
| | temperature °C | 30 | |

**Table 3: Formulation/Processing of Violet DALI Ink**

| Ink Formulation | | wt% | g |
|---|---|---|---|
| Hostaperm Violet RL02 | | 15 | 12 |
| Solsperse 39000 | | 7.81 | 6.25 |
| Oligomers | Sartomer CN294E | 48.91 | 39.13 |
| | Sartomer CN2256 | 7 | 5.6 |
| Monomer | Sartomer CD501 | 11.27 | 9.02 |
| Photoinitiators | BASF Irgacure 379 | 2 | 1.6 |
| | BASF Irgacure 819 | 1.39 | 1.11 |
| | Lamberti Esacure KIP 150 | 3.62 | 2.89 |
| Thermal stabilizer | Sartomer CN3216 | 1 | 0.8 |
| Filler | Southern Clay Products Claytone HY | 2 | 1.6 |
| Total | | 100 | 80 |
| Process Step **1** | | Resodyn LabRAM Mixer | |
| Process parameters | Intensity % | 90 | |
| | G's | 64-105 | |
| | Time(min) | 10 | |
| | Frequency | 60 Hz automatic | |
| Process Step 2 | | melt mixing in beaker | |
| Process parameters | rpm | 1000 | |
| | temperature °C | 80 | |
| | Time (min) | 45 | |
| Process step 3 | | Erweka AR400 3 roll mill | |
| Process parameters | pass #1 | ✔ | |
| | temperature °C | 80 | |
| | pass #2 | ✔ | |
| | temperature °C | 30 | |
| | pass#3 | ✔ | |
| | temperature °C | 30 | |

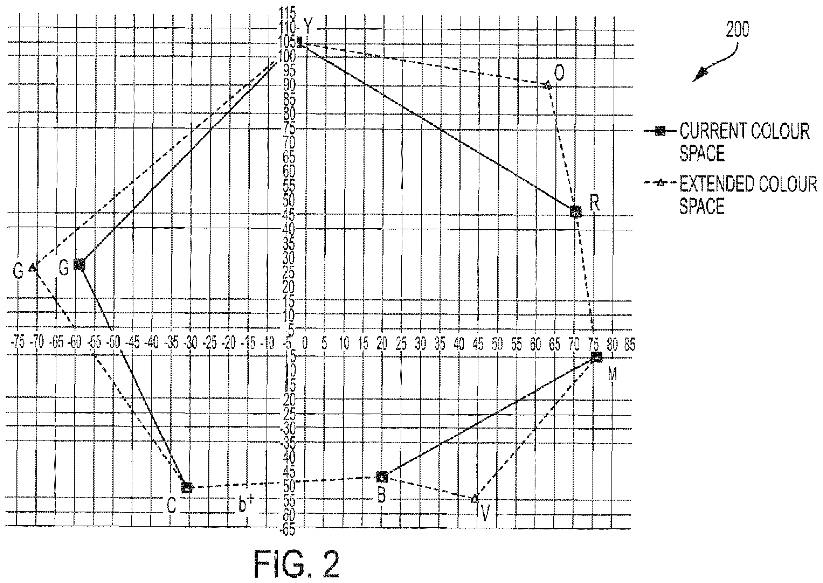

The preparation of inks found in Tables 1, 2 and 3 involved adding all of the components to a 120 mL polyethylene bottle and transferring to a Resodyn LabRAM acoustic mixer whereupon after mixing, the pre-wetted and mixed components are qualitatively transferred to a 100 mL stainless steel beaker for continued mixing with an anchor impeller. The contents of the stainless steel beaker are qualitatively transferred to the Erweka 3-roll mill for 3 passes. All inks contain UV curable components for the DALI architecture and pigments are compatible in the required UV curable components. The inks are in the viscosity range of 1 - 2.5 × 10⁵ cps (100 rad/s), and the tack range of 25-35 g·m (60 s) at 32°C. The previous three formulations are only examples of functioning inks and could be mixed in various combinations and with other pigments. The formulated four inks have viscosities within 5% of each other at 100 rad/sec and between 5 × 10⁵ and 1 × 10⁷ mPa·s at 1 rad/sec which is the estimated shear conditions at transfer to substrate (112 at FIG. 1). FIG. 2 is a comparison of current ink set (CMY) versus CMY and OGV in accordance to an embodiment.

Each of the inks were applied to a DALI composite fluorosilicone blanket and completely transferred from the surface onto a paper substrate, in contrast to a traditional offset process where the ink layer is split between blanket and substrate. The inks were transferred onto XEROX Digital Color Elite Gloss (DCEG) paper at different densities such that the resultant visible optical densities range at 1.5 and such that the L* brightness of the transferred images are in a range suitable for each color after having been cured using a Fusion UV Lighthammer L6 curing station equipped with D bulb and such that the applied energy doses for UVV, UVA, UVB, and UVC bands are 640, 1401, 420 and 37 mJ/cm², respectively. The print image dimensions are on the order of 2 cm by 3 cm.

MEK Rub Testing (Robustness): A soft applicator dipped in Methylethyl ketone (MEK) solvent at room temperature is spread evenly across (about 2 cm) each of the images on DCEG paper using constant pressure with fresh MEK being re-applied onto the applicator every 5 double MEK rubs. The number of MEK double rubs required before the paper substrate becomes visible is recorded with the number of double MEK rubs with the summary of results in Table 4. MEK double rubs obtained were in the range of 50-130 double rubs (>50 being the target for robust inks suitable for labels).

**Table 4: Robustness data for OGV Images on DCEG Paper**

| **Color** | **Orange (O1)** | **Green (G1)** | **Violet (G3)** |
|---|---|---|---|
| **MEK double rubs** | **50** | **128** | **89** |

Determination of Coloristic Properties: A spectrodensitometer X-Rite 528 was used to measure the color properties of the ink images using D50 and 2° settings. Each of the images was measured 3 times with the mean data reported in Table 5.

**Table 5: Coloristic Data for OGV Images on DCEG Paper**

| **Color** | **Pigment** | **O.D.** | **L*** | **a*** | **b*** |
|---|---|---|---|---|---|
| Orange | Graphthol Orange RL-MX | 1.5 | 60.58 | 63.45 | 93.26 |
| Green | Hostaperm Green 8G | 1.5 | 64.12 | -67.55 | 23.02 |
| Violet | Hostaperm Violet RL02 | 1.5 | 14.31 | 42.45 | -50.80 |

The current DALI color gamut covers CMY and RGB regions, as shown in red on FIG. 2. The addition of OGV inks extends the green and blue/magenta gamut, with a deep extension of orange.

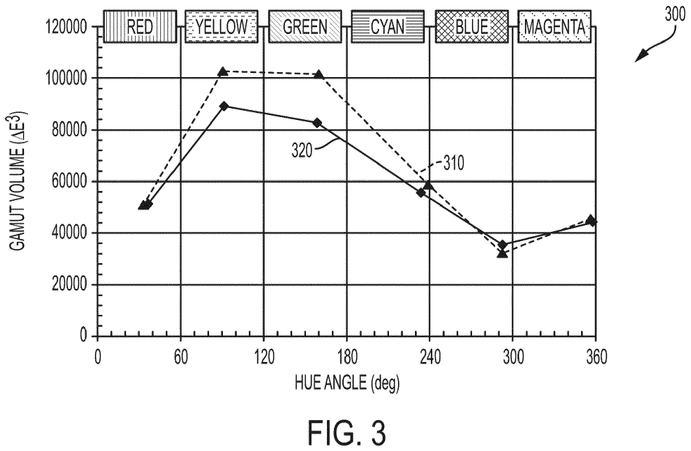

FIG. 3 is a comparison of total M-C and Y-G gamut volume in accordance to an embodiment. Gamut volume is estimated by calculating the relevant triangle ordinates in L*a*b* space from one printing color adjacent to another printing color with the L*a*b* values of black and white (usually the printed substrate) to determine the volume of the given tetrahedron. The volumes of all the continuing and adjacent color tetrahedra in sequence are calculated and then summed to yield a total color gamut volume. This is an estimate only as color exists in curved L*a*b* space near the extreme ranges. Importantly, FIG. 3 highlights that the relevant prints have a particular hue angle. Perceptions of colors depend more on just hue angle but also on luminosity and chroma of an article like a printed substrate. Those on the art can estimate hue angle ranges 310 for any subtractive color by noting that there could be perceptions of a given color outside the specified range (especially secondary colors with low chroma) but that the substantial number of perceived colors in a given color zone would be within the specified hue angle range 310. FIG. 3 compares the DALI CMY_OGV extended space to the GRACoL target, for CMYRGB gamut volumes, each of the DALI colors meets or exceeds the GRACoL gamut volume. Green is extended due to the inclusion of the green ink. In addition to the extension of CMYRGB, the ability to print extended gamut oranges and violets is achieved, which extends beyond GRACoL, and so is not included in this figure.

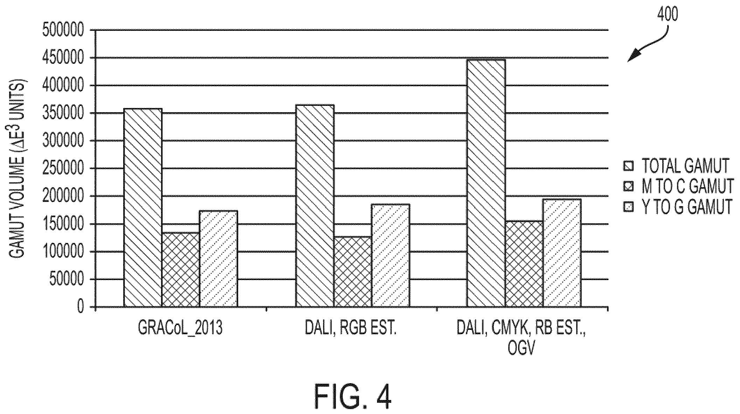

FIG. 4 is a gamut volume distribution comparison for ink sets in accordance to an embodiment. In FIG. 4, the total, M-C, and Y-G gamut volumes for RGB are compared for GRACoL, DALI, and DALI CMY-OGV. Overall, DALI with OGV gamut extension provides larger gamut volume compared with both GRACoL (25% increase) and the current DALI (22% increase). The increase in total gamut volume is due to relatively higher YG and also MC gamut volumes.

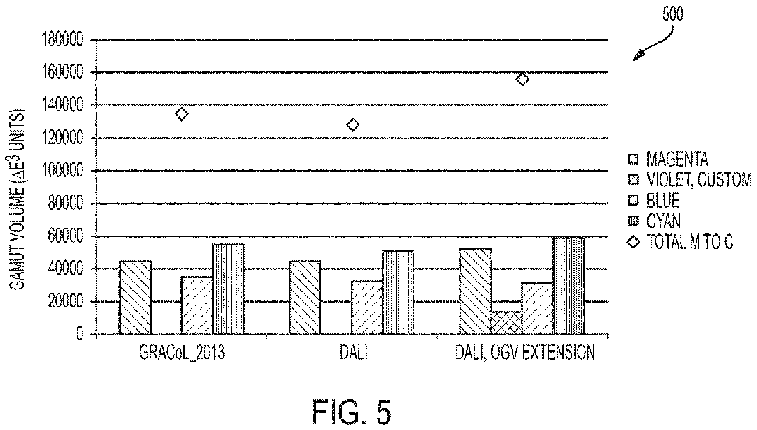

FIG. 5 is gamut volume comparison of total M-C for different ink sets in accordance to an embodiment.

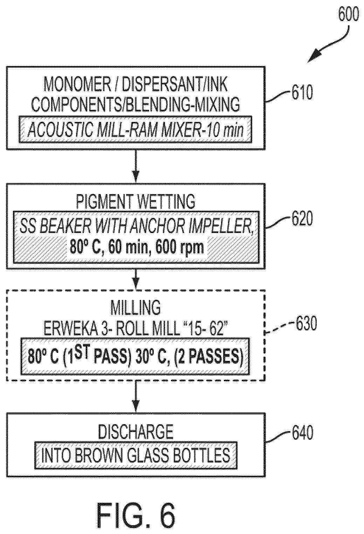

FIG. 6 illustrates an exemplary process flow diagram 600 for OGV Inks compositions sets in accordance to an embodiment. In action 610, Monomer / Dispersant / Ink components / Blending-Mixing are combined in an Acoustic Mill-RAM Mixer. In action 620, pigment wetting is done in a SS Beaker with Anchor Impeller, at 80°C, 60 min, 600 rpm. In action 630, Milling Erweka AR-400 3-roll mill 80°C (1st pass) 30°C, (2 Passes). In action 640, the composition is discharged into brown glass bottles.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. An ink composition for variable data lithography printing comprising:
an ink vehicle and at least one colorant component suspended in solution in the ink composition; and
the solution comprising two or more of
at least one dispersant;
a thermal stabilizer; and
a photo initiator system;
wherein the at least one colorant component is selected from a group that includes a cyan ink, a magenta ink, a yellow ink, a black ink, and one or more of an orange ink, a green ink and a violet ink.

2. The ink composition of claim 1, the solution further comprising:
a rheology modifying agent.

3. The ink composition of claim 2, wherein the vehicle is a radiation-curable compound that comprises monomer compounds selected from the group of compounds comprising mono-, di-, and tri-functional acrylate monomers, tetra-functional acrylates and oligomers.

4. The ink composition of claim 3, wherein the green ink contains Hostaperm Green 8G.

5. The ink composition of claim 3, wherein the orange ink contains Permanent Orange RLF01.

6. The ink composition of claim 3, wherein the violet ink contains Hostaperm Violet RL02.

7. The ink composition of claim 2, wherein the colorant contains Permanent Orange RLF01, Hostaperm Violet RL02, and Hostaperm Green 8G.

8. A process for variable lithographic printing, comprising:
applying a dampening fluid to an imaging member surface;
forming a latent image by evaporating the dampening fluid from selective locations on the imaging member surface to form hydrophobic non-image areas and hydrophilic image areas;
developing the latent image by applying an ink composition comprising an ink component to the hydrophilic image areas; and
transferring the developed latent image to a receiving substrate;
wherein the ink composition comprises an ink vehicle and at least one colorant component suspended in solution in the ink composition; and
the solution comprising two or more of
at least one dispersant;
a thermal stabilizer; and
a photo initiator system;
wherein the at least one colorant component is selected from a group that includes a cyan ink, a magenta ink, a yellow ink, a black ink, and one or more of an orange ink, a green ink and a violet ink;
wherein colorant components s have a viscosity range of 1 - 2.5 × 10⁵ centipoise and a tack range of 25-35 g·m (60 s) at 32°C.

9. The process for variable lithographic printing of claim 8, the solution further comprising:
a rheology modifying agent;
wherein the rheology modifying agent being in an amount of 2, 4, 8, or 9 percent by weight.

10. The process for variable lithographic printing of claim 9, wherein the vehicle is a radiation-curable compound that comprises monomer compounds selected from the group of compounds comprising mono-, di-, and tri-functional acrylate monomers, tetra-functional acrylates and oligomers.
